# EUROPÄISCHE PATENTSCHRIFT

(11) **EP 3 181 291 B1**
(45) Veröffentlichungstag und Bekanntmachung des Hinweises auf die Patenterteilung: **02.01.2019**
(21) Anmeldenummer: 16198822.5
(22) Anmeldetag: 15.11.2016
(51) Int. Cl.: B24B 13/005, B24B 9/14

(54) **WERKSTÜCK MIT OPTISCHEM LINSENROHLING, VERFAHREN ZU DESSEN HERSTELLUNG UND VERFAHREN ZU DESSEN BEARBEITUNG**
WORKPIECE WITH OPTICAL LENS BLANK, METHOD FOR ITS PREPARATION AND METHOD FOR ITS PROCESSING
PIÈCE À USINER COMPRENANT UNE ÉBAUCHE DE LENTILLE OPTIQUE, SON PROCÉDÉ DE FABRICATION ET SON PROCÉDÉ D'USINAGE

(30) Priorität: 14.12.2015 DE 102015121682
(43) Veröffentlichungstag der Anmeldung: 21.06.2017
(73) Patentinhaber: OptoTech Optikmaschinen GmbH, 35435 Wettenberg (DE)
(72) Erfinder: Mandler, Roland, 35452 Heuchelheim (DE)
(74) Vertreter: Patentanwälte Olbricht Buchhold Keulertz

(56) Entgegenhaltungen:
- EP-A1- 2 145 730

## Beschreibung

Die Erfindung betrifft ein Werkstück mit einem optischen Linsenrohling, ein Verfahren zu dessen Herstellung und ein Verfahren zur Bearbeitung eines solchen Werkstücks. Aus optischen Linsenrohlingen werden insbesondere Brillengläser hergestellt. Obwohl hierbei individuelle optische Flächen hergestellt werden müssen, um Sehfehler von Personen zu korrigieren, gleicht die Fertigung einer Massenproduktion. Nur so lassen sich die Brillengläser kostengünstig herstellen. Weil die Herstellung von Optiken klassischer Weise ein Handwerk ist und immer noch eine hohe Flexibilität notwendig ist, um die notwendigen optischen Flächen herzustellen, existieren im Stand der Technik zahlreiche Maschinen, um einzelne Arbeitsschritte automatisiert auszuführen, so zum Beispiel Fräsmaschinen, Drehmaschinen, Poliermaschinen und Beschichtungsmaschinen. Zwischen diesen automatisierten Arbeitsschritten werden jedoch weiterhin manuelle Arbeitsschritte ausgeführt.

Einer dieser Arbeitsschritte betrifft das Abziehen von Schutzfolien, die auf einer ersten Linsenfläche eines optischen Linsenrohlings aufgebracht werden, während die zweite Linsenfläche bearbeitet wird. Hier stören überstehende Ränder bei der Bearbeitung, weswegen meist eine vollflächige Verklebung eingesetzt wird. Zum Abziehen nimmt ein Arbeiter ein spitzes Werkzeug, um die Abdeckfolie anzuheben und dann abzuziehen. Das ist jedoch zeitaufwändig und führt außerdem zu Kratzern auf der Oberfläche des Linsenrohlings. Hierdurch erhöht sich der Ausschuss.

Aufgabe der Erfindung ist es daher, ausgehend vom bekannten Stand der Technik, e.g. der EP 2 145 730 A1, ein Werkstück und ein Verfahren bereitzustellen, mit denen eine bearbeite Linsenfläche effektiv während weiterer Arbeitsschritte geschützt ist und die vor allem einen hohen Automatisierungsgrad bei der Abarbeitung der Arbeitsschritte erlaubt. Die Lösung soll dabei einfach ausführbar und kostengünstig sein.

Die Erfindung wird gemäß dem Gegenstand von Anspruch 1 sowie den Ansprüchen 10 und 11 definiert. Weitere Ausgestaltungen sind Gegenstand der Ansprüche 2 bis 9 und 12.

Erfindungsgemäß weist das Werkstück einen optischen Linsenrohling mit einer ersten Linsenfläche und einer zweiten Linsenfläche, die gegenüberliegend angeordnet und an einem Linsenumfang begrenzt sind, und eine Abdeckfolie auf der ersten Linsenfläche auf. Dabei ist eine erste Ausnehmung im Linsenrohling ausgebildet, die in Richtung der ersten Linsenfläche offen ausgestaltet ist, und die zumindest teilweise in Richtung der ersten Linsenfläche durch die Abdeckfolie überspannt ist.

Vorteilhaft an einer derartigen Ausgestaltung ist, dass die Abdeckfolie in dem Bereich, der die erste Ausnehmung überspannt einfach gegriffen und dann von dem Linsenrohling abgezogen werden kann. Damit ist die erste Linsenfläche bis zum Abziehen der Abdeckfolie vor Beschädigungen geschützt. Insbesondere kann die erste Linsenfläche daher eine optisch wirksame Oberfläche haben. Durch das Überspannen der Ausnehmung flattert dieser Bereich der Abdeckfolie auch nicht unkontrolliert bei einer schnellen Rotation des optischen Linsenrohlings in einer Bearbeitungsmaschine. Geräusche und Vibrationen durch ein Flattern werden verhindert. Es wird zudem verhindert, dass eine optional selbstklebende Abdeckfolie im Bereich der Ausnehmung mit dem freiliegenden Abschnitt an irgendetwas haften bleibt und damit versehentlich ein Abziehen bewirkt. Durch die Positionierung der Ausnehmung an der optischen Linse ist in vielen Bearbeitungsmaschinen auch die Lage des zu greifenden Abschnitts der Abdeckfolie bekannt, denn für die Fertigung von asymmetrischen Brillengläsern ist die Drehwinkellage eine Entscheidende Information. Daher kann der stets an bekannter definierter Stelle liegende Greifabschnitt, der die Ausnehmung überspannt, auf einfache Weise auch mit automatisierten Greifern gegriffen werden.

In einer näheren Ausgestaltung des Werkstücks ist vorgesehen, dass die erste Ausnehmung in Richtung des Linsenumfangs offen ausgestaltet ist. Damit kann zum Zwecke des Greifens der Abdeckfolie aus der Richtung des Linsenumfangs in die Ausnehmung hineingegriffen werden. Wenn die erste Ausnehmung nicht in Richtung des Linsenumfangs offen ausgestaltet ist, bleiben je nach Ausgestaltung der ersten Ausnehmung beispielsweise die Optionen aus Richtung der ersten Linsenfläche in die Ausnehmung einzugreifen, hilfsweise auch unter Durchstoßen der Abdeckfolie, und aus Richtung der zweiten Linsenfläche in die Ausnehmung einzugreifen, um die Abdeckfolie zumindest anzuheben und dann zu greifen.

Bei einer speziellen Ausführungsform des Werkstücks ist die erste Ausnehmung über das Eck offen ausgestaltet, welches von der ersten Linsenfläche und dem Linsenumfang ausgebildet ist. Damit lässt sich ein Greifwerkzeug ohne Probleme in die Greifposition bewegen und mit gegriffener Abdeckfolie von dem optischen Linsenrohling wegbewegen.

Gemäß einem weiteren optionalen Design ist die erste Ausnehmung in Richtung der zweiten Linsenfläche offen ausgestaltet. Damit kann man aus Richtung der zweiten Linsenfläche in die Ausnehmung eingreifen. Zudem wäre eine solche Ausnehmung dazu geeignet, ein einfaches Abziehen einer Abdeckfolie auf der zweiten Linsenfläche zu ermöglichen. Bevorzugt ist die erste Ausnehmung über das Eck offen ausgestaltet, welches von der zweiten Linsenfläche und dem Linsenumfang ausgebildet ist.

Weiterhin ist eine optionale Ausgestaltung möglich, nach der die erste Ausnehmung eine Nut ist. Eine Nut ist auf einfache Weise herstellbar und bietet eine gute Öffnung zum Eingreifen zum Zwecke des Abziehens der Abdeckfolie. Bevorzugt erstreckt sich die Nut am Linsenumfang von der ersten Linsenfläche bis zur zweiten Linsenfläche. Vorzugsweise ist die Nut länger als breit und/oder breiter als tief und/oder länger als tief. Damit resultiert eine Nut, in die gut eingegriffen werden kann, die gut mit der Abdeckfolie überspannbar ist und trotzdem verkleinert sich die verfügbare Fläche für eine zu fertigende Linse nur geringfügig. Zur Vermeidung von Spannungsspitzen im Material des Linsenrohlings ist es von Vorteil eine Nut mit abgerundetem oder rundem Nutboden vorzusehen.

In einer speziellen Ausführungsform ist über dem Linsenumfang verteilt wenigstens noch eine zweite Ausnehmung angeordnet, die zumindest teilweise in Richtung der ersten Linsenfläche durch die Abdeckfolie überspannt ist. Damit kann der Schwerpunkt der Linse in der Mitte des Linsenrohlings liegen. Hierdurch wird eine Unwucht vermieden. Zudem kann die Abdeckfolie gleich an mehreren Stellen gegriffen und abgezogen werden. Das ist insbesondere von Vorteil, wenn eine Überspannung einer Ausnehmung beim Bearbeiten beschädigt wird oder beim Greifen zerstört wird.

Hinsichtlich der Ausgestaltung der zweiten Ausnehmung besteht die Option, dass die zweite Ausnehmung in Richtung des Linsenumfangs offen ausgestaltet ist. Eine weitere Option ist, dass die zweite Ausnehmung über das Eck offen ausgestaltet ist, welches von der ersten Linsenfläche und dem Linsenumfang ausgebildet ist. Dabei kann die zweite Ausnehmung in Richtung der zweiten Linsenfläche offen ausgestaltet sein. Weiterhin ist vorsehbar, dass die zweite Ausnehmung über das Eck offen ausgestaltet ist, welches von der zweiten Linsenfläche und dem Linsenumfang ausgebildet ist. Wiederum ist es besonders vorteilhaft, wenn die zweite Ausnehmung eine Nut ist. Die vorstehend beschriebenen Vorteile zur ersten Ausnehmung gelten für die jeweiligen Ausgestaltungsoptionen der zweiten Ausnehmung entsprechend. Bevorzugt sind die Ausnehmungen baugleich. Als besonders praktisch erweisen sich drei oder vier Ausnehmungen, die über dem Linsenumfang verteilt angeordnet sind.

Weiterhin ist in einer Ausgestaltungsvariante vorgesehen, dass die Abdeckfolie mit Ausnahme der Überspannung der Ausnehmungen vollständig auf der ersten Linsenfläche aufliegt. Entsprechend gibt es keinen störenden Überstand der Abdeckfolie, der unkontrolliert umherflattern könnte. Mit anderen Worten steht die Abdeckfolie mit Ausnahme der Überspannung der Ausnehmungen nicht über den Linsenumfang hinaus. Geräusche und Vibrationen durch ein Flattern werden verhindert.

In einer besonderen Ausgestaltung des Werkstücks ist die Abdeckfolie mit Ausnahme der Überspannung der Ausnehmungen vollständig mit der ersten Linsenfläche verbunden, insbesondere verklebt. Damit entsteht ein stabiler Verbund, der es erlaubt, größere Kräfte zu übertragen. Dies ist insbesondere bei einem Haltern des Werkstücks an der Abdeckfolie von Vorteil.

Hinsichtlich der näheren Ausgestaltung des optischen Linsenrohlings, bestehen die Optionen, dass die erste Linsenfläche konkav oder konvex ist. Außerdem kann die zweite Linsenfläche unabhängig hiervon konkav oder konvex ausgebildet sein. Aus den möglichen Merkmalskombinationen lässt sich eine Vielzahl unterschiedlicher optischer Linsen fertigen. Dabei weist der Linsenumfang bevorzugt eine kreisförmige Grundform auf.

Betreffend die Abdeckfolie ist es besonders zu bevorzugen, wenn diese auf die erste Linsenfläche geklebt ist. Ein Verkleben ist einfach realisierbar. Vorzugsweise wird hierzu eine selbstklebende Abdeckfolie eingesetzt. Diese ist besonders einfach aufzubringen.

Für die Bearbeitung des Werkstücks ist eine spezielle Ausführung von besonderem Vorteil, bei welcher der optische Linsenrohling und die Abdeckfolie auf ein Haltestück aufgeblockt sind. Der so aufgeblockte Linsenrohling lässt sich einfach und fest in verschiedenen Bearbeitungsmaschinen einspannen und bearbeiten. Hierbei sollte das Haltestück auf der Seite der ersten Linsenfläche relativ zum optischen Linsenrohling angeordnet sein. Dabei kann die Abdeckfolie eine Trennschicht zwischen dem optischen Linsenrohling und dem Haltestück ausbilden, und vorzugsweise eine vollständige Trennung zwischen dem optischen Linsenrohling und dem Haltestück bewirken. Damit wird die erste Linsenfläche von der Abdeckfolie vor aggressiven Medien des Aufblockmittels geschützt.

Die Erfindung betrifft außerdem ein Verfahren zur Herstellung eines Werkstücks wie es vorstehend und nachstehend beschrieben ist, bei dem ein optischer Linsenrohling mit einer ersten Linsenfläche und einer zweiten Linsenfläche, die sich gegenüberliegend angeordnet und an einem Linsenumfang begrenzt sind, bereitgestellt wird. Es erfolgt eine spanende, schleifende, polierende und/oder oberflächenbehandelnde Bearbeitung der ersten Linsenfläche und spanende Herstellung einer ersten Ausnehmung im Linsenrohling, die in Richtung der ersten Linsenfläche offen ausgestaltet ist. Anschließend wird eine Abdeckfolie auf die erste Linsenfläche aufgebracht, insbesondere aufgeklebt, mit der die erste Ausnehmung zumindest teilweise in Richtung der ersten Linsenfläche überspannt ist.

Damit ist die bereits bearbeitete erste Linsenfläche während der weiteren Linsenbearbeitung mit Hilfe der Abdeckfolie geschützt. Die erste Ausnehmung ermöglicht dabei ein einfaches Abziehen der Abdeckfolie. Dabei können auch die speziellen weiteren Merkmale des Werkstücks jeweils einzeln verfahrensgemäß umgesetzt sein. Die jeweils hierzu beschriebenen Vorteile sind hierdurch realisierbar. Vorzugsweise erfolgt das Aufbringen der Abdeckfolie auf die erste Linsenfläche automatisiert.

In einer speziellen Verfahrensvariante werden der optische Linsenrohling und die Abdeckfolie auf ein Haltestück aufgeblockt, wobei die Abdeckfolie zwischen dem Linsenrohling und dem Haltestück angeordnet ist. Damit kann die Bearbeitung der zweiten Linsenfläche bei einfachem Einspannen des Werkstücks am Haltestück erfolgen.

Die Erfindung betrifft außerdem ein Verfahren zur Bearbeitung eines Werkstücks wie es vorstehend und nachstehend beschrieben ist oder eines nach dem vorstehend beschriebenen Verfahren hergestellten Werkstücks, bei dem zunächst eine spanende, schleifende, polierende und/oder oberflächenbehandelnde Bearbeitung der zweiten Linsenfläche erfolgt. Anschließend erfolgt ein Greifen der Abdeckfolie in einem Greifbereich, in dem die Abdeckfolie die erste Ausnehmung überspannt, und zu einem Abziehen der Abdeckfolie von der ersten Linsenfläche durch Ziehen an dem gegriffenen Greifbereich. Durch den definierten und freiliegenden Bereich der Abdeckfolie, ist das Abziehen von der Abdeckfolie besonders einfach und das Risiko, die bereits bearbeiteten Linsenflächen zu beschädigen gering. Damit ist das Verfahren besonders geeignet zur Herstellung von Linsen oder Brillengläsern mit beidseitig bearbeiteten Freiformflächen. Der Vorteil einer beidseitigen Bearbeitung liegt in der hohen Flexibilität der Linsengestaltung und einer sehr geringen Anzahl an notwendigen Rohlinsen, um alle typischen Brillengläser fertigen zu können.

In einer speziellen Verfahrensvariante ist das Werkstück in einer Bearbeitungsmaschine befestigt und das Greifen der Abdeckfolie an dem Greifbereich und das Abziehen werden mit einem automatisch gesteuerten Greifer durchgeführt. Damit kann eine große automatisierte Fertigungstiefe erzielt werden, denn es sind keine manuellen Zwischenschritte zum Ablösen der Abdeckfolie erforderlich. Entsprechend werden geringe Fertigungskosten pro Linse erreicht. Besonders bevorzugt wird das Werkstück beim Abziehen mit einem Vakuumhalter durch Unterdruck auf der zweiten Linsenfläche gehalten. Sofern ein Haltestück vorgesehen ist, sollte das Abziehen erst nach einem Ablocken des Haltestücks erfolgen. Beide Maßnahmen sind jeweils geeignet dazu, die Folie automatisiert und ohne Beschädigung der bearbeiteten Linsenflächen durchzuführen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: in einer schematischen Ansicht einen Schnitt durch ein Werkstück;
- Fig. 2: eine schematische Draufsicht auf ein Werkstück; und
- Fig. 3: eine schematische Ansicht eines Werkstückes, wobei ein Abziehen einer Abdeckfolie von einer ersten Linsenfläche eines optischen Linsenrohlings angedeutet ist.

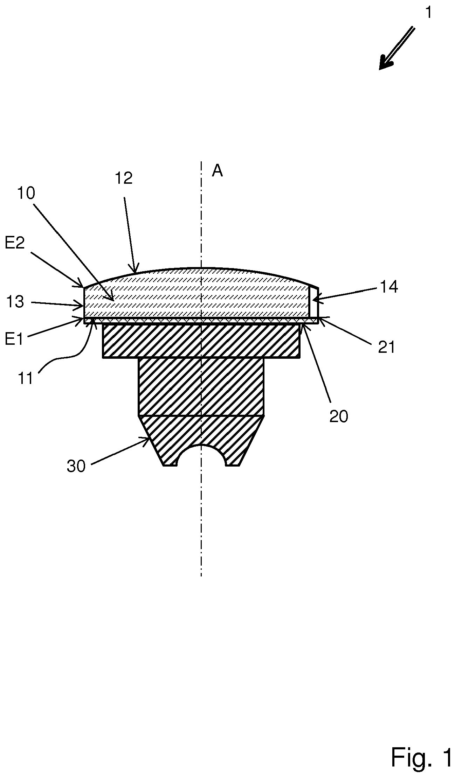

**Fig. 1** zeigt ein Werkstück 1, das einen optischen Linsenrohling 10, eine Abdeckfolie 20 und ein Haltestück 30 aufweist. Diese sind gemeinsam um eine angedeutete Rotationsachse A rotierbar.

Der optische Linsenrohling 10 verfügt über eine erste Linsenfläche 11 und eine zweite Linsenfläche 12, die sich gegenüberliegend angeordnet und an einem Linsenumfang 13 begrenzt sind. Dabei weist der Linsenumfang 13 eine kreisförmige Grundform auf.
Der gezeigte optional ausgestaltete optische Linsenrohling 10 ist insbesondere scheibenförmig, wobei die erste Linsenfläche 11 eben und die zweite Linsenfläche 12 konvex ausgestaltet sind.

In dem Linsenrohling 10 ist eine erste Ausnehmung 14 ausgebildet, die in Richtung der ersten Linsenfläche 11, in Richtung der zweiten Linsenfläche 12 und in Richtung des Linsenumfangs 13 offen ausgestaltet ist. Insbesondere ist die erste Ausnehmung 14 auch über das Eck E1 offen ausgestaltet, welches von der ersten Linsenfläche 11 und dem Linsenumfang 13 ausgebildet ist. Gleiches gilt für das zweite Eck E2. Die erste Ausnehmung 14 ist auch über dieses zweite das Eck E2 offen ausgestaltet, welches von der zweiten Linsenfläche 12 und dem Linsenumfang 13 ausgebildet ist. Hierdurch ergibt sich eine Nutform der ersten Ausnehmung 14. Diese Nut erstreckt sich am Linsenumfang 13 von der ersten Linsenfläche 11 bis zur zweiten Linsenfläche 12. Die Nut ist länger als tief.

Man erkennt, dass die Abdeckfolie 20 auf der ersten Linsenfläche 11 aufliegt. Dabei überspannt die Abdeckfolie 20 die erste Ausnehmung 14 zumindest teilweise in Richtung der ersten Linsenfläche 11. Dabei liegt die Abdeckfolie 20 mit Ausnahme der Überspannung der Ausnehmungen 14 vollständig auf der ersten Linsenfläche 11 auf und steht nicht über den Linsenumfang 13 hinaus. Bevorzugt ist die Abdeckfolie 20 mit Ausnahme der Überspannung der Ausnehmungen 14 vollständig mit der ersten Linsenfläche 11 verbunden, besonders bevorzugt verklebt. Für letzteres kann die Abdeckfolie 20 selbstklebend ausgeführt sein.

Der optische Linsenrohling 10 ist über die Abdeckfolie 20 auf das Haltestück 30 aufgeblockt. Hierzu ist das Haltestück 30 auf der Seite der ersten Linsenfläche 11 relativ zum optischen Linsenrohling 10 angeordnet. Die Abdeckfolie 20 bildet eine Trennschicht zwischen dem optischen Linsenrohling 10 und dem Haltestück 30 aus, die eine vollständige Trennung zwischen dem optischen Linsenrohling 10 und dem Haltestück 30 bewirkt.

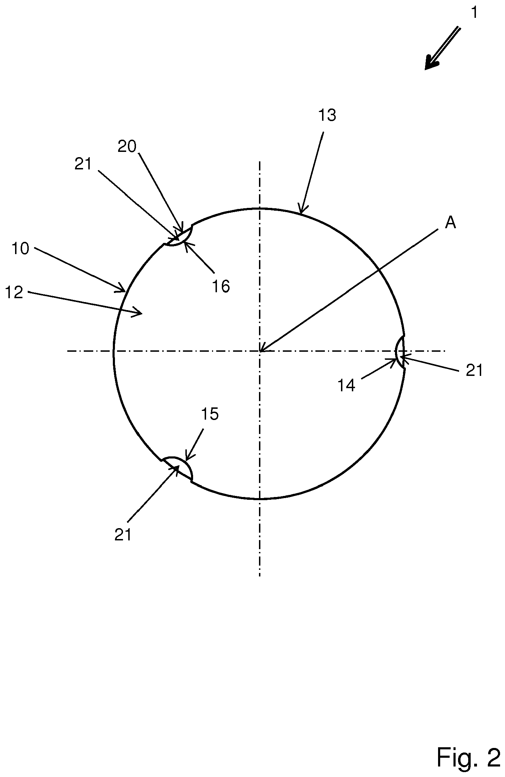

In **Fig. 2** erkennt man eine schematischen Draufsicht auf ein Werkstück 1, wie es von Fig. 1 gezeigt wird. Insofern sei auf die Beschreibung zu Fig. 1 verwiesen. Kurz zusammengefasst sieht man auch in Fig. 2 den optischen Linsenrohling 10, hier jedoch aus Richtung der zweiten Linsenfläche 12. Die Rotationsachse A verläuft durch das Zentrum des Linsenrohlings 10. Besonders gut erkennbar ist die erste Ausnehmung 14 und wie diese von der Abdeckfolie 20 zumindest teilweise überspannt ist. Hierdurch wird ein Greifbereich 21 ausgebildet.

Zusätzlich erkennt man, dass über dem Linsenumfang 13 verteilt noch eine zweite Ausnehmung 15 und eine dritte Ausnehmung 16 angeordnet sind, die jeweils auch zumindest teilweise in Richtung der ersten Linsenfläche 11 durch die Abdeckfolie 20 überspannt sind. Auch die zweite und dritte Ausnehmung 15, 16 sind in Richtung des Linsenumfangs 13, in Richtung der ersten Linsenfläche 11 und in Richtung der zweiten Linsenfläche offen ausgestaltet, dies insbesondere auch über die Ecken, welche jeweils von einer der ersten und zweiten Linsenfläche 11, 12 sowie dem Linsenumfang 13 ausgebildet sind. Es handelt sich also bei allen drei Ausnehmungen 14, 15, 16 um Nuten. Diese haben insbesondere jeweils einen runden Nutboden und sind gleich ausgestaltet. Außerdem sind die Nut breiter als tief.

Durch die gleichmäßige Verteilung der Ausnehmungen 14, 15, 16 über dem Linsenumfang 13 liegt der Schwerpunkt des optischen Linsenrohlings 10 in dessen Mitte.

Die in den Fig. 1 und 2 gezeigten Werkstücke lassen sich dadurch herstellen, dass zumindest die folgenden Schritte durchgeführt werden:
- Bereitstellung eines optischen Linsenrohlings 10 mit einer ersten Linsenfläche 11 und einer zweiten Linsenfläche 13, die sich gegenüberliegend angeordnet und an einem Linsenumfang 13 begrenzt sind;
- spanende, schleifende, polierende und/oder oberflächenbehandelnde Bearbeitung der ersten Linsenfläche 11 und spanende Herstellung der Ausnehmungen 14, 15, 16 im Linsenrohling 10, die in Richtung der ersten Linsenfläche 11, der zweiten Linsenfläche 12 und dem Linsenumfang 13 offen ausgestaltet sind;
- Aufbringen einer Abdeckfolie 20 auf die erste Linsenfläche 11, mit der die Ausnehmungen 14, 15, 16 zumindest teilweise in Richtung der ersten Linsenfläche 11 überspannt sind.
- Anschließend lassen sich der optische Linsenrohling 10 und die Abdeckfolie 20 gemeinsam auf ein Haltestück 30 aufblocken, wobei die Abdeckfolie 20 zwischen dem Linsenrohling 10 und dem Haltestück 30 angeordnet ist.

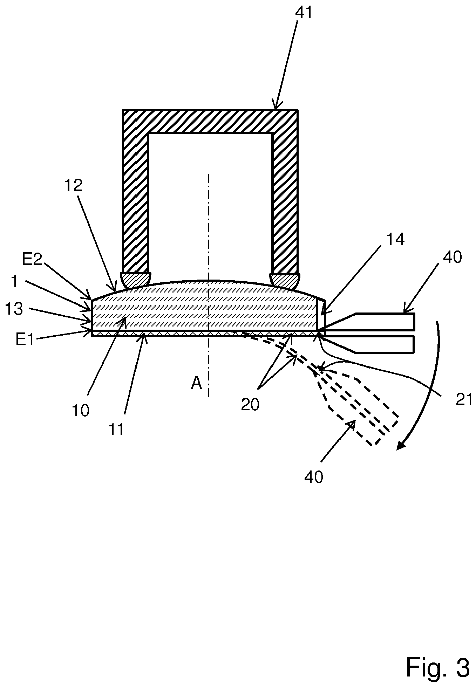

In Fig. 3 erkennt man, wie ein Werkstück 1 in einer Bearbeitungsmaschine 41, die zumindest den gezeigten Vakuumhalter aufweist, aufgenommen ist. Das Werkstück 1 entspricht dem nach Fig. 1, wobei jedoch das Haltestück 30 bereits abgeblockt wurde.

Zu sehen ist ferner, wie die Abdeckfolie 20 an dem Greifbereich 21 mit einem Greifer 40 gegriffen ist. Ein Abziehen der Abdeckfolie 20 von der ersten Linsenfläche 11 ist gestrichelt angedeutet. Diese gestrichelte Replikation des Greifers 40 und der Abdeckfolie 20 zeigen, wie sich der Greifer 40 relativ zum optischen Linsenrohling 10 bewegt und die Abdeckfolie 20 von der ersten Linsenfläche 11 abzieht.

Die Erfindung ist nicht auf eine der vorbeschriebenen Ausführungsformen beschränkt, sondern im Rahmen der Patentansprüche abwandelbar.

### Bezugszeichenliste

- 1: Werkstück

- 10: optischer Linsenrohling
- 11: erste Linsenfläche
- 12: zweite Linsenfläche
- 13: Linsenumfang
- 14: erste Ausnehmung
- 15: zweite Ausnehmung
- 16: dritte Ausnehmung

- 20: Abdeckfolie
- 21: Greifbereich

- 30: Haltestück

- 40: Greifer
- 41: Bearbeitungsmaschine

- A: Rotationsachse
- E1: Ecke
- E2: Ecke

## Patentansprüche

1. **Werkstück** (1) aufweisend
- einen optischen Linsenrohling (10) mit einer ersten Linsenfläche (11) und einer zweiten Linsenfläche (12), die sich gegenüberliegend angeordnet und an einem Linsenumfang (13) begrenzt sind, und
- eine Abdeckfolie (20) auf der ersten Linsenfläche (11),
**dadurch gekennzeichnet, dass**
- eine erste Ausnehmung (14) im Linsenrohling (10) ausgebildet ist,
- die in Richtung der ersten Linsenfläche (11) offen ausgestaltet ist, und
- die zumindest teilweise in Richtung der ersten Linsenfläche (11) durch die Abdeckfolie (20) überspannt ist.

2. Werkstück (1) nach Anspruch 1, **dadurch gekennzeichnet, dass** die erste Ausnehmung in Richtung des Linsenumfangs (13) offen ausgestaltet ist.

3. Werkstück (1) nach Anspruch 2, **dadurch gekennzeichnet, dass** die erste Ausnehmung (14) über ein Eck (E1) offen ausgestaltet ist, welches von der ersten Linsenfläche (11) und dem Linsenumfang (13) ausgebildet ist.

4. Werkstück (1) nach einem der vorhergehenden Ansprüche, **dadurch gekennzeichnet, dass** die erste Ausnehmung (14) in Richtung der zweiten Linsenfläche (12) offen ausgestaltet ist.

5. Werkstück (1) nach einem der vorhergehenden Ansprüche, **dadurch gekennzeichnet, dass** die erste Ausnehmung (14) eine Nut ist.

6. Werkstück (1) nach einem der vorhergehenden Ansprüche, **dadurch gekennzeichnet, dass** über dem Linsenumfang (13) verteilt wenigstens noch eine zweite Ausnehmung (15) angeordnet ist, die zumindest teilweise in Richtung der ersten Linsenfläche (11) durch die Abdeckfolie (20) überspannt ist.

7. Werkstück (1) nach einem der vorhergehenden Ansprüche, **dadurch gekennzeichnet, dass** die Abdeckfolie (20) mit Ausnahme der Überspannung der Ausnehmungen (14, 15) vollständig auf der ersten Linsenfläche (11) aufliegt.

8. Werkstück (1) nach einem der vorhergehenden Ansprüche, **dadurch gekennzeichnet, dass** die Abdeckfolie (20) mit Ausnahme der Überspannung der Ausnehmungen (14, 15) vollständig mit der ersten Linsenfläche verbunden ist.

9. Werkstück (1) nach einem der vorhergehenden Ansprüche, **dadurch gekennzeichnet, dass** der optische Linsenrohling (10) und die Abdeckfolie (20) auf ein Haltestück (30) aufgeblockt sind.

10. **Verfahren** zur Herstellung eines Werkstücks (1) nach einem der Ansprüche 1 bis 9 umfassend die folgenden Schritte:
- Bereitstellung eines optischen Linsenrohlings (10) mit einer ersten Linsenfläche (11) und einer zweiten Linsenfläche (13), die sich gegenüberliegend angeordnet und an einem Linsenumfang (13) begrenzt sind;
- spanende, schleifende, polierende und/oder oberflächenbehandelnde Bearbeitung der ersten Linsenfläche (11) und spanende Herstellung einer ersten Ausnehmung (14) im Linsenrohling (10), die in Richtung der ersten Linsenfläche (11) offen ausgestaltet ist;
- Aufbringen einer Abdeckfolie (20) auf die erste Linsenfläche (11), mit der die erste Ausnehmung (14) zumindest teilweise in Richtung der ersten Linsenfläche (11) überspannt ist.

11. **Verfahren** zur Bearbeitung eines Werkstücks (1) nach einem der Ansprüche 1 bis 9 oder eines nach dem Verfahren des Anspruchs 10 hergestellten Werkstücks (1), umfassend die folgenden Schritte:
- spanende, schleifende, polierende und/oder oberflächenbehandelnde Bearbeitung der zweiten Linsenfläche (12);
- anschließend Greifen der Abdeckfolie (20) in einem Greifbereich (21), in dem die Abdeckfolie (20) die erste Ausnehmung (14) überspannt, und Abziehen der Abdeckfolie (20) von der ersten Linsenfläche (11) durch Ziehen an dem gegriffenen Greifbereich (21).

12. Verfahren nach Anspruch 11, **dadurch gekennzeichnet, dass** das Werkstück (1) in einer Bearbeitungsmaschine (41) befestigt ist und das Greifen der Abdeckfolie (20) an dem Greifbereich (21) und das Abziehen mit einem automatisch gesteuerten Greifer (40) durchgeführt wird.

## Claims

1. **Workpiece** (1) having
- an optical lens blank (10) with a first lens face (11) and a second lens face (12), which are arranged opposite each other and are delimited at a lens circumference (13), and
- a cover film (20) on the first lens face (11),
**characterised in that**
- a first recess (14) is formed in the lens blank (10)
- which is open in the direction of the first lens face (11), and
- which is at least partially spanned in the direction of the first lens face (11) by the cover film (20).

2. Workpiece (1) according to claim 1, **characterised in that** the first recess is open in the direction of the lens circumference (13).

3. Workpiece (1) according to claim 2, **characterised in that** the first recess (14) is open over a corner (E1), which is formed by the first lens face (11) and by the lens circumference (13).

4. Workpiece (1) according to any of the preceding claims, **characterised in that** the first recess (14) is open in the direction of the second lens face (12).

5. Workpiece (1) according to any of the preceding claims, **characterised in that** the first recess (14) is a groove.

6. Workpiece (1) according to any of the preceding claims, **characterised in that** at least another second recess (15) is arranged, distributed over the lens circumference (13) and is at least partially spanned in the direction of the first lens face (11) by the cover film (20).

7. Workpiece (1) according to any of the preceding claims, **characterised in that** the cover film (20), except where it spans the recesses (14, 15), lies completely on the first lens face (11).

8. Workpiece (1) according to any of the preceding claims, **characterised in that** the cover film (20), except where it spans the recesses (14, 15), is connected completely to the first lens face.

9. Workpiece (1) according to any of the preceding claims, **characterised in that** the optical lens blank (10) and the cover film (20) are blocked on a holding piece (30).

10. **Method** for producing a workpiece (1) according to any of claims 1 to 9, comprising the following steps:
- providing an optical lens blank (10) with a first lens face (11) and a second lens face (13), which are arranged opposite each other and are delimited at a lens circumference (13);
- machining the first lens face (11) by cutting, grinding, polishing and/or surface treatment and cutting a first recess (14) in the lens blank (10), which first recess is open in the direction of the first lens face (11);
- applying a cover film (20) to the first lens face (11), with which the first recess (14) is at least partially spanned in the direction of the first lens face (11).

11. **Method** for machining a workpiece (1) according to any of claims 1 to 9 or for machining a workpiece (1) produced according to the method of claim 10, comprising the following steps:
- machining the second lens face (12) by cutting, grinding, polishing and/or surface treatment;
- then gripping the cover film (20) in a gripping area (21), in which the cover film (20) spans the first recess (14), and pulling the cover film (20) off from the first lens face (11) by pulling at the gripped gripping area (21).

12. Method according to claim 11, **characterised in that** the workpiece (1) is secured in a machining tool (41), and the cover film (20) is gripped at the gripping area (21) and pulled off using an automated gripper (40).

## Revendications

1. **Pièce à usiner** (1) présentant :
- une ébauche de lentille optique (10) avec une première surface de lentille (11) et une seconde surface de lentille (12), qui sont agencées à l'opposé l'une de l'autre et sont bornées à la périphérie de lentille (13) et
- un film de recouvrement (20) sur la première surface de lentille (11),
**caractérisée en ce que**
- une première cavité (14) est formée dans l'ébauche de lentille (10),
- qui se présente ouverte dans la direction de la première surface de lentille (11) et
- qui est recouverte au moins en partie dans la direction de la première surface de lentille (11) par le film de recouvrement (20).

2. Pièce à usiner (1) selon la revendication 1, **caractérisée en ce que** la première cavité se présente ouverte dans la direction de la périphérie de lentille (13).

3. Pièce à usiner (1) selon la revendication 2, **caractérisée en ce que** la première cavité (14) se présente ouverte sur un angle (E1), qui est formé par la première surface de lentille (11) et la périphérie de lentille (13).

4. Pièce à usiner (1) selon l'une quelconque des revendications précédentes, **caractérisée en ce que** la première cavité (14) se présente ouverte dans la direction de la seconde surface de lentille (12).

5. Pièce à usiner (1) selon l'une quelconque des revendications précédentes, **caractérisée en ce que** la première cavité (14) est une rainure.

6. Pièce à usiner (1) selon l'une quelconque des revendications précédentes, **caractérisée en ce qu'**elle est agencée, répartie sur la périphérie de lentille (13), au moins encore une deuxième cavité (15) qui est recouverte au moins en partie dans la direction de la première surface de lentille (11) par le film de recouvrement (20).

7. Pièce à usiner (1) selon l'une quelconque des revendications précédentes, **caractérisée en ce que** le film de recouvrement (20) s'applique complètement sur la première surface de lentille (11) à l'exception du recouvrement des cavités (14, 15).

8. Pièce à usiner (1) selon l'une quelconque des revendications précédentes, **caractérisée en ce que** le film de recouvrement (20) est relié complètement à la première surface de lentille à l'exception du recouvrement des cavités (14, 15).

9. Pièce à usiner (1) selon l'une quelconque des revendications précédentes, **caractérisée en ce que** l'ébauche de lentille optique (10) et le film de recouvrement (20) sont dressés sur une pièce d'appui (30).

10. **Procédé** de fabrication d'une pièce à usiner (1) selon l'une quelconque des revendications 1 à 9, comprenant les étapes suivantes consistant à :
- préparer une ébauche de lentille optique (10) avec une première surface de lentille (11) et une seconde surface de lentille (13) qui sont agencées à l'opposé l'une de l'autre et sont bornées à une périphérie de lentille (13) ;
- traiter par enlèvement de copeaux, rectification, polissage et/ou traitement de surface la première surface de lentille (11) et ménager par enlèvement de copeaux une première cavité (14) dans l'ébauche de lentille (10), qui se présente ouverte dans la direction de la première surface de lentille (11) ;
- appliquer un film de recouvrement (20) sur la première surface de lentille (11), avec lequel la première cavité (14) est recouverte au moins en partie dans la direction de la première surface de lentille (11).

11. **Procédé** de traitement d'une pièce à usiner (1) selon l'une quelconque des revendications 1 à 9 ou d'une pièce à usiner (1) fabriquée selon le procédé de la revendication 10, comprenant les étapes suivantes consistant à :
- traiter la seconde surface de lentille (12) par enlèvement de copeaux, rectification, polissage et/ou traitement de surface ;
- ensuite saisir le film de recouvrement (20) dans une zone de préhension (21) dans laquelle le film de recouvrement (20) recouvre la première cavité (14) et retirer le film de recouvrement (20) de la première surface de lentille (11) par traction sur la zone de préhension saisie (21).

12. Procédé selon la revendication 11, **caractérisé en ce que** la pièce à usiner (1) est fixée dans une machine de traitement (41) et la saisie du film de recouvrement (20) se fait dans la zone de préhension (21) et le retrait à l'aide d'un dispositif de préhension commandé automatiquement (40).
